Europäisches Patentamt

**European Patent Office**

Office européen des brevets

(19)

(11) Publication number: **0 084 443**
**A2**

(12) # EUROPEAN PATENT APPLICATION

(21) Application number: **83300183.7**

(51) Int. Cl.³: **A 61 C 7/00**

(22) Date of filing: **14.01.83**

(30) Priority: **15.01.82 US 339500**
**27.12.82 US 432430**

(43) Date of publication of application:
**27.07.83 Bulletin 83/30**

(84) Designated Contracting States:
**CH DE FR GB IT LI SE**

(71) Applicant: **Picard, Peter J.**
**1804 San Miguel Drive**
**Walnut Creek California(US)**

(72) Inventor: **Picard, Peter J.**
**1804 San Miguel Drive**
**Walnut Creek California(US)**

(74) Representative: **Baillie, Iain Cameron et al,**
**c/o Ladas & Parry Isartorplatz 5**
**D-8000 München 2(DE)**

(54) Orthodontic method and devices.

(57) This invention relates generally to orthodontic methods for applying an array of brackets to the maloccluded teeth of a patient. The method disclosed essentially comprises the steps of forming locater surfaces on maloccluded teeth, making an impression of the maloccluded teeth with locater surfaces formed thereon, forming a working cast from said impression, repositioning the cast teeth in desired positions of occlusion, securing brackets to replica portions of the cast which correspond to the locater surfaces while forming interface fillers therebetween, removing the brackets from the cast and, finally, locating and securing said brackets and attached interface fillers to the patient's teeth. Adhesive bonding material may be used to form such locater surfaces on the teeth. Alternatively, a curved platelet may be applied to each tooth, said platelets having either an irregular shape or indentations which provide points of reference. The thickness of the interface layers provide the necessary torque, tip and labial-lingual offset necessary for correcting each tooth to a desired position of occlusion.

EP 0 084 443 A2

Croydon Printing Company Ltd

-1-

# ORTHODONTIC METHOD AND DEVICES

## SUMMARY OF THE INVENTION

Various methods are known for fitting orthodontic brackets to teeth. Such methods often use positive dental arches or models to effect the proper adjustment and positioning of the brackets. Two basically different methods have been utilized, one method known as direct bonding and the other indirect bonding. In addition, there are known prior art procedures available to complete treatment for malocclusion using a coplanar arch wire having no buccal-lingual steps or other adjustment factors. A description of such a process is disclosed in U.S. Patent Nos. 4,014,096 and 3,949,478.

The present invention provides a novel method for forming interface layers on the bases of conventional brackets, each interface layer being formed with a thickness that provides the necessary torque, tip and labial-lingual offset for correcting each tooth to a desired position of occlusion. An important step of the novel method resides in forming locater surfaces on maloccluded teeth--as by applying adhesive bonding material or platelets to the teeth. The locater surfaces define points of reference that allow precise alignment for bonding a bracket to each tooth.

In general, the method comprises the steps of initially forming locater surfaces, making an impression of the teeth with locater surfaces, forming a working cast from the impression that is formed, repositioning the cast teeth in desired positions of occlusion, securing brackets to those surface portions of the cast which are surface replicas of the locater surfaces formed on the teeth

-2-

while simultaneously forming interface fillers therebetween, removing the brackets and interface fillers from the cast teeth and, finally, locating and securing the brackets and attached interface fillers to the patient's teeth. Each bracket and interface filler is bonded to the respective tooth by matching the impression of the interface layer with the locater surfaces on the teeth.

The principal object of the present invention is to provide a novel method of orthodontics that obviates much of the guesswork required of conventional procedures.

A further object of the invention is to provide a method for applying brackets to maloccluded teeth of a patient such that necessary corrections for tip, torque and labial-lingual offset are taken into consideration when the brackets are mounted to the teeth.

Another object is to provide a method that simplifies the procedure for dentists and which requires less skill while providing reliable and accurate corrections to accomplish an ideal position of occlusion for each tooth.

A still further object is to provide locater surfaces on each tooth that is to be corrected, which surfaces serves as a key or reference for mounting an orthodontic bracket.

And yet another object is to provide a bracket having a base that supports an interface layer that may be bonded to a tooth, the interface layer of each bracket providing whatever torque, tip and labial-lingual offset is necessary for correcting (moving) the tooth to a desired position of occlusion.

Other objects of this invention will become apparent in view of the following detailed description.

BRIEF DESCRIPTION OF THE DRAWINGS

In the drawings formally a part of this application and in which like parts are identified by like references throughout the same,

Figs. 1-6 illustrate six progressive steps or stages in the formation of interface layers of particular thickness and shape for the attachment of brackets to maloccluded teeth;

Figs. 1a-6a illustrate vertical sections of tooth profiles representative of the stages of development in the formation of interface layers on the brackets, each figure being associated with the particular stage of development or step shown in the same numbered figure directly above;

Fig. 7 illustrates a perspective view of a novel platelet that may be utilized to form a locater surface on maloccluded teeth;

Fig. 8 is a vertical section of the platelet taken on lines 8-8 of Fig. 7;

Fig. 9 is an enlarged detail and partial section of the platelet;

Figs. 10, 11 and 12 illustrate three different conditions of bracket placement in the development of interface layers to accommodate the surface contour of a given tooth and to effect a specific correction of that tooth;

Figs. 13,15 and 16 illustrate a preferred form of apparatus for attaching brackets to a cast model of teeth, each figure illustrating a different position of the apparatus; and

Fig. 14 is a section of the apparatus taken on line 14-14 of Fig. 13.

The method herein described relates to a new technical procedure that enables orthodontists to individualize tip, torque and in-out offset for each tooth and for each treatment plan. The new procedure contemplates the use of conventional brackets, including the standard or the torqued-angulated varieties. It will be apparent that the new procedure eliminates many of the difficulties now encountered by the use of direct and indirect bonding. Although some steps of the process, and some of the materials described herein, have been used with various other dental procedures, novelty of the process resides in a combination of new steps and the use of newly designed parts which make the technique easier, more efficient and more comfortable for the patient. Most especially, the new technique, when utilized properly, finalizes the occlusion accurately.

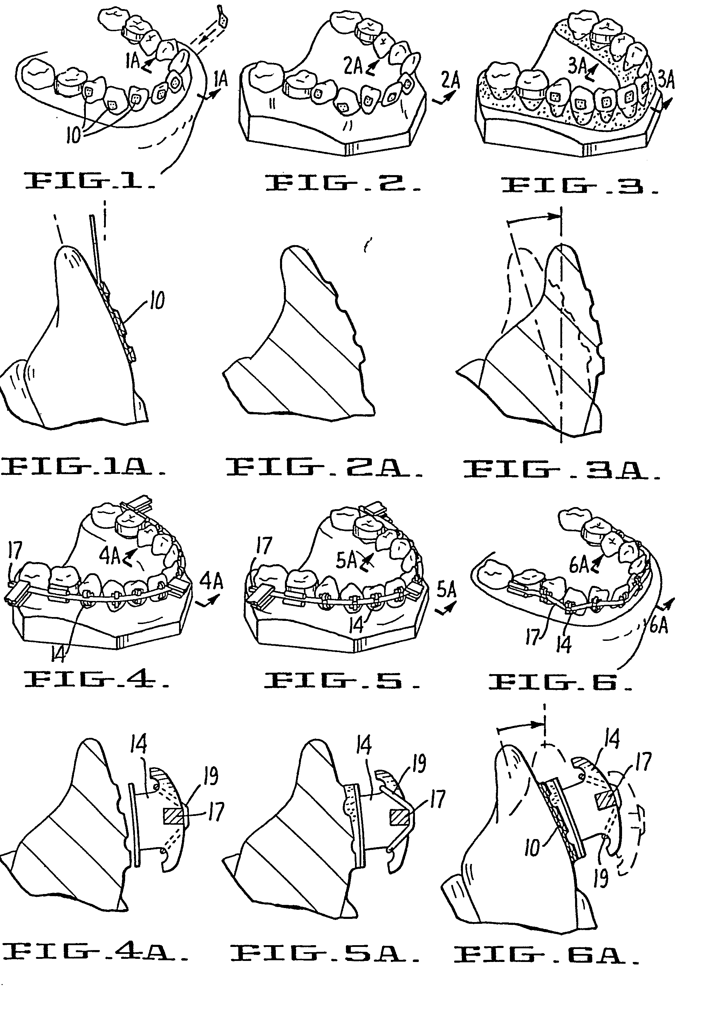

Referring to Figs. 1 and 1a in particular, the initial step of the process contemplates the formation of locater surfaces on all maloccluded teeth. This may be accomplished by means of attaching (or bonding) small wiremeshed platelets 10 to the maloccluded teeth in a patient's mouth. Each platelet 10 is slightly curved to conform with the tooth surface to which it is applied. The convex side of the platelet is formed with indentations that define smooth locater surfaces. One embodiment of platelet comprises an impermeable center layer sandwiched between two wire mesh layers and a filler, said filler occupying the interstices of the wire mesh on the convex side to form a release surface. As shown, the platelets are intended for attachment to the buccal and labial surfaces. Notwithstanding, the procedure herein described is also applicable for placing platelets and brackets on the lingual surfaces of the teeth, and in those instances, the platelets will be contoured to match the lingual surface of each tooth.

Platelets 10 utilize three elongated and rounded indentations or depressions 11, 12, and 13.

-5-

Sharp corners are to be avoided in forming the depressions. Such corners may impair the formation of a tooth casting or model as contemplated in the further procedure and create problems in obtaining a release from the casting.

The arrangement of depressions provides locater surfaces which are to be matched by the surfaces of interface fillers formed on what may be considered standard brackets 14. Platelets 10 are preferably formed with essentially the same outline and contour as used for bases of conventional brackets. However, the size and contour of the platelets may vary between teeth just as do bases of brackets now conventionally employed.

As stated above, the use of platelets to form locater surfaces is but one method for forming such surfaces on the teeth. Instead, locater surfaces can be formed by applying bonding material directly to each tooth and then shaping the bonding material with a stamp having an irregular contour. The bonding material would then be allowed to dry or take a set, thus forming locater surfaces on the teeth.

A third alternative for forming locater surfaces is to apply bonding material to the tooth; allow the material to set or harden; and then, using a dental burr or small rotary cutter create an irregular shape.

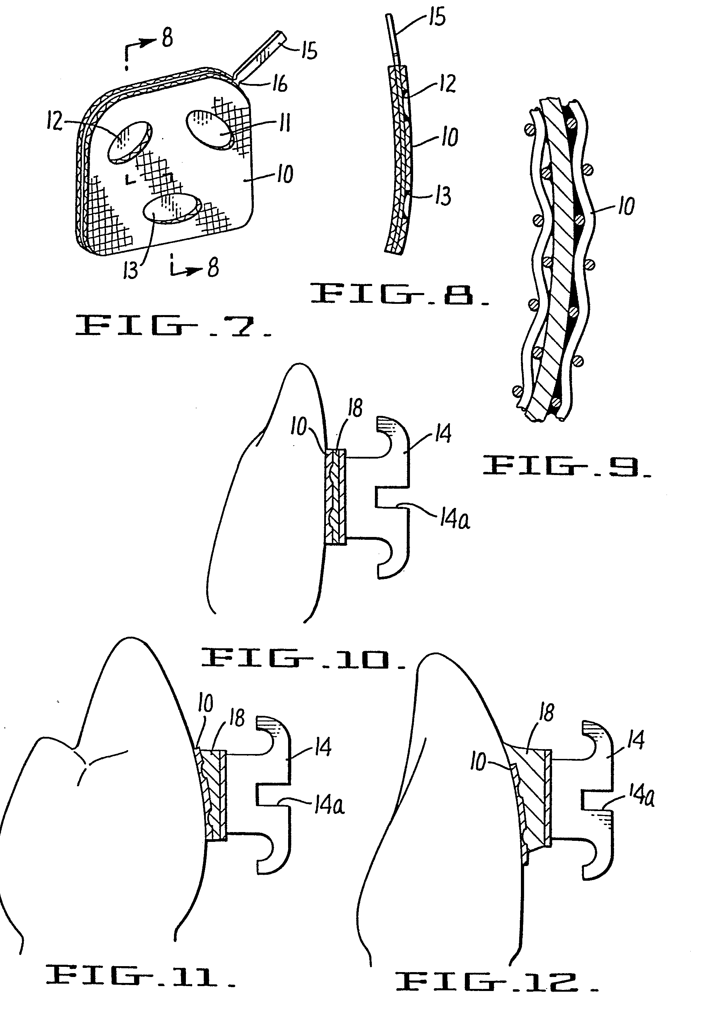

In practicing the invention with platelets as illustrated in Fig. 2, each platelet is formed with a small handle 15, 3 mm. in length, extending at approximately $45^o$ from its edge. This handle allows the platelet to be held during bonding and facilitates the attachment of platelets to teeth. A fracture line 16 may be formed between the handle and platelet to facilitate its removal.

After all platelets have been bonded to maloccluded teeth, handles are removed by fracturing and any objectionable fracture line is removed by polishing. An accurate impression of the dental arches with platelets bonded to teeth is now taken, and an orthodontic model is cast. Such a model or working cast is shown in Figs. 2 and 2a. Ordinarily, it is best to make two castings so that one can serve as a reference. In those instances it may be necessary or desirable to take two impressions. It may also be advisable to orient the model anatomically into an articulator instrument by means of the face bow transfer technique, a technique well known in this art.

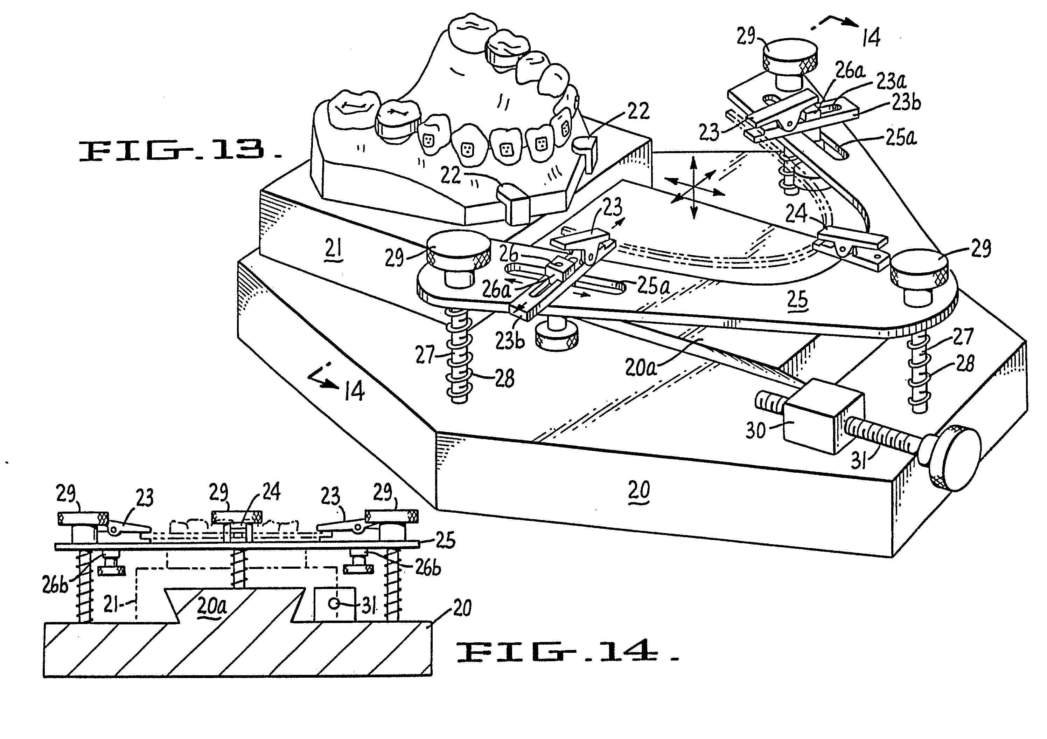

At this stage of the process, one of the models is used for the construction of a so-called final set up or master model. This is accomplished by severing and repositioning the individual teeth on their plaster bases, thereby creating their exact final treatment position, and occlusion. Figs. 3 and 3a illustrate such condition.

Referring to Figs. 4 and 4a, a plurality of brackets 14 having bases of substantially the same size and contour as the platelets are supported relative to the replica locater surfaces of the casting. Each bracket is formed with a rectangular slot 14a for receiving an arch wire 17. Unlike so-called straight wire brackets, the slots need not be torqued or angulated relative to the bracket base. Brackets 14 are secured to the replica locater surfaces with a cementitious or hardenable bonding material, which itself forms a rigid interface layer 18. This procedure may be carried out with the apparatus shown in Figs. 13-16 as follows:

A rectangular arch wire 17 is formed around the dental arch of the master model or casting. The arch wire is formed without incorporating first, second or third order bends, and it has neither tip nor torque correction. The size of the rectangular arch wire must be such as to fill the bracket slots completely without allowing any play in any direction. In the horizontal plane of support, the arch wire should be oversized if anything to provide rigidity.

The individual brackets are next placed or strung onto the arch wire and positioned relative to the respective cast teeth of the matrix. The brackets may be held on the wire with an elastic ring 19 such as that sold under the name "Alastik". This attachment allows each bracket to be moved on the arch wire in a mesio-distal direction only.

The brackets are now bonded onto the plaster replicas of platelet surfaces. In that process an interface filler or layer 18 is formed on each bracket, said filler surfaces taking on an imprint of the replica locater surfaces formed on the casting. The interface fillers which are formed will ordinarily have varying degrees of thickness and contour and, as also shown in Figs. 10, 11 and 12, it is not essential that the bracket base and platelet replicas match each other in total surface area. It is only necessary that the raised surfaces of the interface layers 18 match or fit the indentations of corresponding locater surfaces and replica locater surfaces.

Fig. 12 illustrates the fact that a precise location of each bracket relative to the associated platelet is unnecessary. The interface layers may be formed as to overlap the platelets and the base of a bracket may be misaligned vertically (as shown) or both vertically and horizontally and even skew relative to the platelets. The indentations of the platelets and the matching raised surfaces formed on the interface layer serve as the means for locating each bracket in precise controlled relation to the tooth upon which it is to be mounted.

0084443

-8-

The molars, which usually are not bonded but receive bands, are handled in the following manner: Before taking the impressions for the set-up model, molars are banded and the occlusal of banded molars are covered with Kerr impression compound. Upon withdrawal of the impression, the compound remains seated in the impression material. The molar bands are now removed from the teeth and seated into the compound impression. The models are then poured up with bands seated in the impression material, and the set-up is made. After the set-up is completed, the plaster inside the bands, on the buccal surface, is carved out to provide a cavity for heat retention during soldering of bands to molar tubes. Thus, after all brackets have been bonded to the platelet replicas, molar tubes are threaded onto the arch wire and soldered to the molar bands.

The soldered connections, it should be noted, provide an angular set and alignment between bands and tubes and, therefore, perform a function similar to the interface layers or fillers 18.

Should it be desirable to have bonded tubes instead of tubes soldered to molar bands, then of course, placement of tubes would be handled in substantially the same manner as the brackets were bonded to platelet replicas. Bonded molar tubes would need either two platelets in tandem, or one specially fabricated molar platelet which would be longer in the mesiodistal direction and made to conform to the buccal anatomy of molars.

A preferred form of apparatus for attaching brackets to the cast model of teeth is illustrated in Figs. 13-16. The apparatus comprises a pair of first and second supports, 20 and 21, mounted relative to each other for rectilinear movement. First support 20 comprises a platform having a central rail 20a, the cross-section of said rail have the shape of a dovetail. Second support 21 comprises a second platform formed with a dovetail groove 21a complimentary to the rail 20a. A pair of L shaped stops 22 are mounted to support 21 for positioning and securing the cast model.

The apparatus further comprises a plurality of grippers or clamps 23 and 24 for holding and supporting an arch wire in a plane substantially parallel to the direction of rectilinear movement. Means is also provided for adjustably mounting the grippers from support 20, such means providing an adjustment for laterally spacing the grippers as well as positioning the grippers vertically relative to supports 20 and 21. It will be evident, therfore, that by proper adjustment or location of the grippers, a cast model of teeth supported on platform 21 can be positioned in juxtaposed relation to a plurality of brackets 14 mounted on an arch wire 17 supported by the grippers.

The adjustable mounting means comprises a support plate 25 supported from first support or platform 20 and having a recess into which a cast model can be moved. Grippers 23 are each mounted to plate 25 near the extremities thereof by means which allows each of them to be moved in any direction parallel to plate 25. For this purpose, a pair of slots 25a are formed in plate 25. A second pair of slots 23a are formed in a bar 23b which also forms one member of the gripper. A clamping bolt 26 projects through the slots 23a and 25a for securing each of the grippers 23 in a selected position for supporting the end portions of the arch wire. Thus, both grippers 23 may be adjustably moved and positioned along both slot 25a and slot 23a. A stop member 26a is mounted at the upper end of bolts 26, the lower end of each bolt being engaged by a threaded nut 26b which may be manually rotated.

Support plate 25 is also adjustably mounted from platform 20 by a plurality of posts 27 and helical springs 28. Posts 27 are secured to platform 20 and project through openings in plate 25, said plates resting upon and capturing helical springs 28. The upper ends of posts 27 are threaded and engage nuts 29. Rotation of the nuts forces plate 25 against the resilient bias of springs 28, positioning plate 25 relative to platforms 20 and 21.

An adjustable stop is also provided for setting the position of the matrix of teeth relative to an arch wire and allowing the matrix to be moved into and out of engagement with brackets supported upon an arch wire. The stop means comprises a block 30 mounted to platform 20 and a threaded member which extends through a threaded opening in said block.

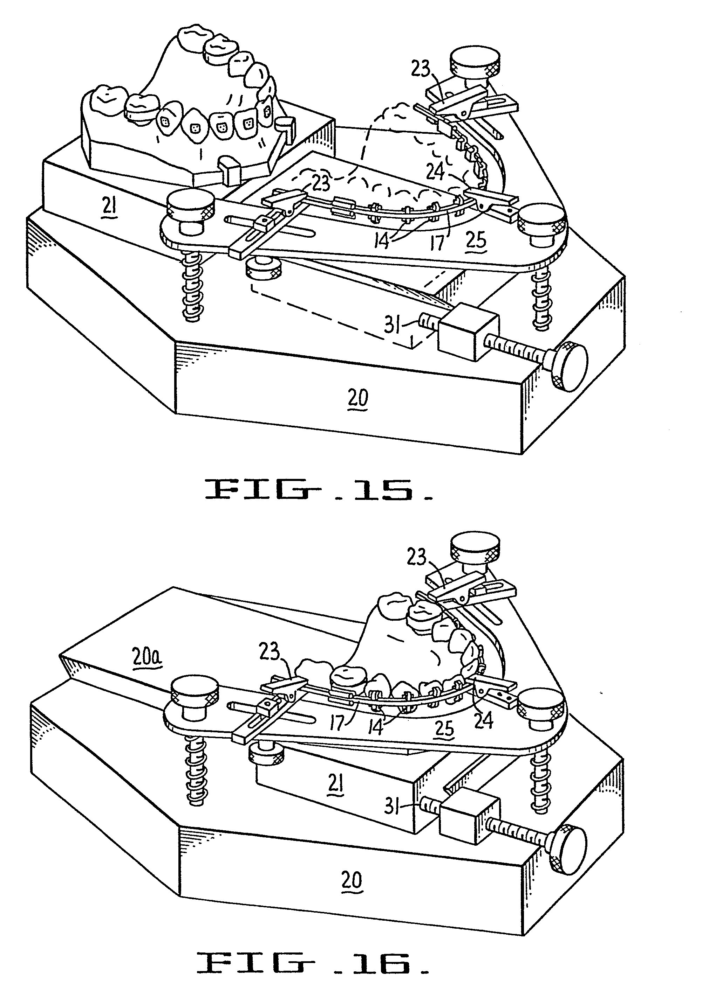

In operation of the apparatus, the model of cast teeth is set on platform 21 and positioned against stops 22 as shown in Fig. 13. An arch wire and brackets are then mounted to grippers 23 and 24, as shown in Fig. 15, said arch wire being held in a plane substantially parallel to the rectilinear direction in which platform 21 moves relative to platform 20. However, the location of grippers 23 and support plate 25 may be adjusted to precisely locate the brackets for selective mounting to the cast model of teeth. Such a position is shown in Fig. 16, all adjustments having been made as necessary to locate the brackets in their most desirable position relative to each tooth of the cast model. The stop means is thereupon adjusted to make contact with platform 21, the end of threaded member 31 making surface contact therewith. This sets the position for cementing each bracket to its associated cast tooth and simultaneously forming an interface filler or layer on each bracket, the thickness, location and shape of the filler conforming to the cast teeth. The stop means allows platform 21 and the cast model of teeth to be backed away from the arch wire and brackets to permit filler cement to be applied to the brackets. After this has been done, the model is returned to a position of contact with the brackets by reference to the stop.

After the bonding material used to form the interface fillers has set, plastic rings 19, which hold the arch wire to the bracket slots, are removed by sliding the wire in the mesial direction. Next, the brackets are separated from the master model, the hardened bonding material adhering to each bracket base and exposing the lingual surface imprint of a replica locater surface. The bonding material is now cleaned of possible adhering plaster, and any material protruding beyond the edges of the bases is trimmed off.

The final step of the process involves locating and securing the brackets and attached interface fillers to the patient's teeth. The mouth and teeth are initially isolated and dried as during any bonding procedure. The brackets are then individually or in groups bonded to their respective locater surfaces. Prior to final bonding, it is preferred to establish proper seating of the brackets onto their respective locater surfaces, the surfaces of the interface fillers matching the imprint of the locater surfaces. After proper fitting is assured, a small amount of bonding material is placed onto the locater surfaces, and the associated bracket and interface filler is seated. Because of the matching surfaces between filler and locater surfaces, the operator need have little concern for proper

-12-

bracket alignment or drifting as commonly experienced in previous direct bonding techniques.

The methods herein described utilize an interface filler that provides all tooth corrections including bracket torque, angulation and labial-lingual offsetting. Moreover, each tooth is individually corrected. To keep the interface fillers thin, it is desirable to use brackets having a very low profile. Notwithstanding, the tip-torque type of bracket (which is conventionally higher in profile) can be used if the interface filler is kept to a minimum thickness.

Although preferred methods and devices formed by those methods have been illustrated and described, various modifications and changes may be resorted to without departing from the spirit of the invention or the scope of the appended claims, and each of such modifications and changes is contemplated.

## CLAIMS

1. A method of orthodontics for correcting a malocclusion comprising the steps: forming locater surfaces on maloccluded teeth; making an impression of the maloccluded teeth with locater surfaces; forming a working cast from said impression; repositioning the cast teeth in desired positions of occlusion; securing brackets to replica locater surfaces of the cast while forming interface fillers therebetween; removing the brackets from said cast; and locating and securing said brackets and attached interface fillers to the patient's teeth, each bracket and filler being attached to the associated tooth by matching the impression of said fillers with the locater surfaces on said teeth.

2. The method of Claim 1, said brackets being secured to the replica locater surfaces of the cast with interface filler material while supported upon an arch wire in substantially coplanar relationship.

3. The method of Claim 1, said locater surfaces being formed on the teeth by applying platelets having relatively smooth and recessed locater surfaces.

4. The method of Claim 1, said locater surfaces being formed on the teeth by applying a bonding material and shaping the material to provide an irregular contour.

5. The method of Claim 4, said bonding material being shaped while in a plastic state and then allowed to harden.

6. The method of Claim 4, said bonding material being allowed to harden and then shaped with a dental burr.

7. The method of Claim 1, said cast teeth being repositioned by sectioning the working cast, and securing the teeth in a master model in desired

-14-

positions of occlusion.

8. The method of Claim 1, each bracket having a slot for receiving an arch wire, the slot of each bracket being supported in substantially coplanar relationship while interface fillers are formed thereon.

9. A method of orthodontics for correcting malocclusion using two-piece wire supports comprising platelets and brackets, said platelets having locater surfaces thereon, said method comprising the steps: securing platelets to the maloccluded teeth in a patient's mouth; making an impression of the maloccluded teeth with the platelets in place; forming a working cast from the impression; repositioning the cast teeth in desired positions of occlusion to form a master model securing brackets to the replica locater surfaces of the cast teeth while forming interface fillers therebetween, said fillers taking an imprint of the replica locater surfaces; removing the brackets and attached interface fillers from the master model; and locating and securing the brackets and attached interface fillers to the associated platelet while referencing the filler imprints with the locater surfaces of the platelets.

10. A method of othodontics for correcting malocclusion comprising the steps: forming locater surfaces on maloccluded teeth; making an impression of the teeth and an imprint of locater surfaces; forming a master model of cast teeth and replica locater surfaces, the cast teeth being set in positions representative of the idealized location of the teeth after correction for malocclusion; supporting a plurality of brackets relative to the replica locater surfaces of the model while forming interface fillers therebetween, said fillers varying in thickness to accomodate variations in surface contour, said filler surfaces taking the imprint of replica locater surfaces formed on the model; and locating and securing each bracket and attached interface filler to the associated locater surface formed on the maloccluded teeth while referencing the filler imprints with the locater surfaces.

11. The method of Claim 10, said brackets being secured to the replica locater surfaces of cast teeth with interface filler material while supported upon an arch wire in substantially coplanar relationship.

12. Brackets for othodontics, each bracket having an interface layer of filler material for attachment to a particular tooth of a patient, said interface layer having an imprint corresponding to the contour and surfaces to which they are to be mounted, the thickness of said interface layer providing the necessary torque, tip and labial-lingual offset necessary for correcting each tooth to a desired position of occlusion, said layer being formed by making an impression of the teeth, forming a master model of cast teeth arranged in positions representative of ideal locations after correction for malocclusion, supporting orthodontal brackets in justaposed relation to the cast teeth, and forming interface layers on said brackets by applying filler material between each cast tooth of the model and its associated bracket.

13. The brackets formed as in Claim 14 preceded by initially forming locater surfaces on maloccluded teeth prior to making an impression thereof, each interface filler having the surface imprint of a replica locater surface formed on the master model of cast teeth.

14. A device for use in orthodontics to form locater surfaces on teeth of patients and comprising a curved platelet having indentations formed on the convex side thereof.

15. The device of Claim 14, each indentation being oval in shape and having a smooth surface.

16. The device of Claim 14, and an integral handle extending from the edge of said platelet, said handle being detachable along a fracture line.

FIG.1.

FIG.2.

FIG.3.

FIG.1A.

FIG.2A.

FIG.3A.

FIG.4.

FIG.5.

FIG.6.

FIG.4A.

FIG.5A.

FIG.6A.

0084443

FIG.7.

FIG.8.

FIG.9.

FIG.10.

FIG.11.

FIG.12.

FIG.13.

FIG.14.

FIG. 15.

FIG. 16.